(19) **Europäisches Patentamt / European Patent Office / Office européen des brevets**

(11) **EP 4 769 289 A1**

(12) # EUROPEAN PATENT APPLICATION
published in accordance with Art. 153(4) EPC

(43) Date of publication:
**01.07.2026 Bulletin 2026/27**

(21) Application number: **24897867.8**

(22) Date of filing: **14.10.2024**

(51) International Patent Classification (IPC):
*G06Q 50/40* (2024.01)     *B60L 53/80* (2019.01)
*B60L 53/62* (2019.01)     *B60L 53/65* (2019.01)
*G06Q 30/02* (2023.01)

(52) Cooperative Patent Classification (CPC):
**B60L 53/62; B60L 53/65; B60L 53/80; G06Q 30/02; G06Q 50/40**

(86) International application number:
**PCT/KR2024/015498**

(87) International publication number:
**WO 2025/116269 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023 KR 20230172499**

(71) Applicant: **LG ENERGY SOLUTION, LTD.**
**Seoul 07335 (KR)**

(72) Inventors:
- **HONG, Suk Min**
  **Daejeon 34122 (KR)**
- **AHN, Hong Duk**
  **Daejeon 34122 (KR)**
- **PARK, Chan Woo**
  **Daejeon 34122 (KR)**
- **CHOI, Jin Hyouk**
  **Daejeon 34122 (KR)**

(74) Representative: **BCKIP Part mbB**
**Landsberger Straße 98**
**80339 München (DE)**

(54) **SERVER, OPERATING METHOD THEREOF, AND BATTERY EXCHANGE SYSTEM**

(57)     According to an embodiment disclosed herein, a server may include a communication circuit, a memory, and a processor operatively connected to the communication circuit and the memory, wherein the processor is configured to set a battery specifiable by a user based on a state of a battery stored in a swappable battery charging station, receive a swap request for the battery specified by the user from the user, and calculate a reward to be provided to the user based on at least one of whether the battery specified by the user has been fully charged and a state of a used battery returned to the swappable battery charging station by the user.

10

| MANAGEMENT SERVER 100 |
| --- |
| COMMUNICATION CIRCUIT 111 |
| MEMORY 113 |
| PROCESSOR 115 |

SWAPPABLE BATTERY CHARGING STATION 200

FIG.1

EP 4 769 289 A1

## Description

## Technical Field

CROSS-REFERENCE TO RELATED APPLICATION

This application claims priority to and the benefit of Korean Patent Application No. 10-2023-0172499 filed in the Korean Intellectual Property Office on December 01, 2023, the entire contents of which are incorporated herein by reference.

TECHNICAL FIELD

Embodiments disclosed herein relate to a server, a method of operating the same, and a swappable battery system.

## Background Art

Recently, research and development on secondary batteries has been actively conducted. Here, the secondary battery is a battery capable of charging and discharging and includes all recent lithium ion batteries such as conventional Ni/Cd batteries and Ni/MH batteries. Among the secondary batteries, the lithium-ion batteries have an advantage of having a much higher energy density than the conventional Ni/Cd batteries, the Ni/MH batteries, and the like. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

A swappable battery charging station (SBCS) is being introduced to charge swappable batteries in order to swap a discharged battery pack with a fully charged battery pack. Users can use a battery pack rented from an SBCS for electric two-wheeled vehicles and then rent a new battery pack while returning the discharged battery pack, and to this end, the SBCS can be installed at a location having high accessibility, such as near convenience stores or gas stations.

## Disclosure

## Technical Problem

Embodiments disclosed herein are directed to providing a server, a method of operating the same, and a swappable battery system, which are capable of efficiently operating a battery swap service.

The technical objects of the embodiments disclosed herein are not limited to the above-described technical objects, and other objects that are not described will be able to be clearly understood by those skilled in the art from the following descriptions.

## Technical Solution

According to an embodiment disclosed herein, a server may include a communication circuit, a memory, and a processor operatively connected to the communication circuit and the memory, wherein the processor is configured to set a battery specifiable by a user based on a state of a battery stored in a swappable battery charging station, receive a swap request for the battery specified by the user from the user, and calculate a reward to be provided to the user based on at least one of whether the battery specified by the user has been fully charged and a state of a used battery returned to the swappable battery charging station by the user.

According to an embodiment, the processor may set a battery for which constant current charging has been completed among the stored batteries to a specifiable battery.

According to an embodiment, the processor may calculate the reward based on at least one of a state of the battery specified by the user and information about the user when the battery specified by the user is not a fully charged battery.

According to an embodiment, the processor may calculate the reward based on a state of charge (SOC) and a state of health (SOH) of the battery specified by the user.

According to an embodiment, the processor may calculate the reward based on an expected capacity calculated from the SOC and SOH of the battery specified by the user.

According to an embodiment, the processor may calculate the reward based on the number of times rewards provided to the user and a service subscription period in which the swappable battery charging station is used.

According to an embodiment, the processor may calculate the reward based on an SOC of the used battery.

According to an embodiment, the processor may calculate the reward based on a boundary value between the SOC of the used battery and a preset range when the SOC of the used battery is within the preset range.

According to an embodiment, the processor may transmit the reward information to a terminal of the user.

According to an embodiment disclosed herein, a method of operating a server may include setting a battery specifiable by a user based on a state of a battery stored in a swappable battery charging station, receiving a swap request for the battery specified by the user from the user, and calculating a reward to be provided to the user based on at least one of whether the battery specified by the user has been fully charged and a state of a used battery returned to the swappable battery charging station by the user.

According to an embodiment, the setting of the specifiable battery may include setting a battery for which constant current charging has been completed among batteries stored in the swappable battery charging station to the specifiable battery.

According to an embodiment, the providing of the reward to the user may include calculating the reward based on at least one of a state of the battery specified by the user and information about the user when the battery specified by the user is not a fully charged battery.

According to an embodiment, the providing of the reward to the user may include calculating the reward based on a state of charge (SOC) of the used battery.

According to an embodiment disclosed herein, a swappable battery system may include a swappable battery charging station configured to charge a battery stored therein, provide a battery specified by a user among specifiable batteries according to a user's swap request, and set a used battery of the user to be returned, and a manager server configured to set a battery specifiable by a user based on a state of a battery stored in the swappable battery charging station, and calculate a reward to be provided to the user based on at least one of whether the battery specified by the user has been fully charged and a state of the used battery.

According to an embodiment, the swappable battery charging station may charge the stored battery at a constant current and a constant voltage.

According to an embodiment, the management server may set a battery for which the constant current charging has been completed among the stored batteries to the specifiable battery.

**Advantageous Effects**

According to the server, the method of operating the same, and the swappable battery system according to the embodiments disclosed herein, it is possible to efficiently operate the swappable battery system by providing the user with the reward according to battery swap.

In addition, various effects that may be directly or indirectly identified through the present document can be provided.

**Description of Drawings**

FIG. 1 is a block diagram showing a structure of a swappable battery system according to one embodiment disclosed herein.

FIG. 2 is a view for describing an operation of the swappable battery system according to one embodiment disclosed herein.

FIG. 3 is a view showing a charging process of a battery according to one embodiment disclosed herein.

FIGS. 4A and 4B are views showing battery swap simulation results of the swappable battery system according to one embodiment disclosed herein.

FIG. 5 is a flowchart for describing a method of operating the server according to one embodiment disclosed herein.

**Mode for Invention**

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

The singular form of a noun corresponding to an item in this document may include one item or a plurality of items unless the relevant context clearly dictates otherwise. In this document, each of phrases such as" A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., in a wired manner), in a wireless manner, or through a third component.

Each (e.g., a module or a program) of components described herein may include a single object or a plurality of objects. According to various embodiments, one or more among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

As used herein, the term "module," or "part" may include a unit implemented in hardware, software, or firmware and may be used interchangeably with terms such as logic, logic block, component, or circuit. The module may be an integrated part or a minimum unit of the parts or a portion thereof that performs one or more functions. For example, according to one embodiment, the module may be implemented in the form of an application-specific integrated circuit (ASIC).

Various embodiments of this document may be implemented as software (e.g., a program or application) including one or more commands stored in a storage medium (e.g., a memory) that may be read by a machine. For example, a processor of the device may fetch at least one command among one or more commands stored from a storage medium and execute the commands. This allows the device to be operated to perform at least one function according to the at least one fetched command. The one or more commands may include code generated by a compiler or code that may be executed by an interpreter. A device-readable storage medium may be provided in the form of a non-transitory storage medium. Here, "non-transitory storage medium" is a tangible device and only means not including a signal (e.g., electromagnetic waves), and this term does not distinguish between cases in which data is stored semi-permanently and temporarily in the storage medium.

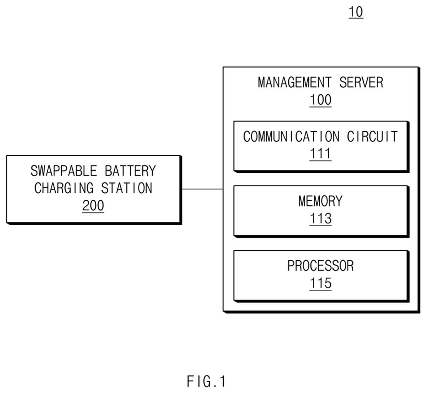

FIG. 1 is a block diagram showing a structure of a swappable battery system according to one embodiment disclosed herein.

Referring to FIG. 1, a swappable battery system 10 may include a management server 100 and a swappable battery charging station 200.

The swappable battery system 10 may allow a user who subscribes to a service for using the swappable battery charging station 200 to swap a battery through the swappable battery charging station 200 and provide a reward according to battery swap.

The swappable battery system 10 may allow the user to specify and swap a non-fully charged battery when a specific condition is satisfied, and thus a battery swap service can be efficiently operated compared to a case in which only a fully charged battery is always swapped.

In addition, the swappable battery system 10 can efficiently operate the swappable battery charging station 200 and efficiently manage the battery used for swap by providing a reward to the user to induce the user's participation.

The user may use a service provided from the management server 100 and the swappable battery charging station 200 using a user terminal. For example, the service may include the battery swap service. To this end, an application for using the battery swap service may be installed in the user terminal.

The user may subscribe to the battery swap service by executing the application in the user terminal and use the battery swap service.

The swappable battery charging station 200 may be mounted on an external electronic device (e.g., a vehicle) to accommodate and charge a discharged battery and may provide a charged battery. Here, the battery may be a swappable battery that may be detachably attached to an external electronic device.

The swappable battery charging station 200 may include components such as a storage unit (e.g., a slot) into which a swappable battery may be inserted or ejected, a charger for charging a battery stored in the storage unit, a controller for performing overall control of the swappable battery charging station 200, and some components may be omitted or other general components may be further included.

The swappable battery charging station 200 may store a plurality of batteries, provide the charged battery according to the user's manipulation, and accommodate the user's used battery.

The swappable battery charging station 200 may charge each of the stored batteries through constant current charging and constant voltage charging. In an embodiment, the constant voltage charging may be performed after constant current charging during the charging process of each battery. For example, the swappable battery charging station 200 may be charged at a constant current until a charging rate of the battery reaches a reference value and then may be charged at a constant voltage until the battery is fully charged. For example, the swappable battery charging station 200 may be charged at a constant current until the charging rate of the battery reaches 80% and then may be charged at a constant voltage until the battery is fully charged.

In general, based on a charging rate of a battery, a charging section corresponding to constant current charging may be wider than a charging section corresponding to constant voltage charging, but a difference between charging times of the sections may not be great because a charging speed of the constant current charging is faster than that of the constant voltage charging. For example, based on the charging rate, the constant current charging section may range from 0% to 80%, and the constant voltage charging section may range from 80% to 100%, which may be four times more than the constant voltage charging section, but the charging time may be similar.

Since there is a limitation to storage capability and charging capability of the swappable battery charging station 200, the swappable battery system 10 can efficiently operate the battery swap service by efficiently managing the charging time of each battery and inducing rapid battery swap accordingly.

The management server 100 may calculate a reward to be provided to the user in the battery swapping process of the swappable battery charging station 200. The management server 100 may induce the user to specify an efficient battery by providing a reward to the user in order to efficiently operate the battery swap service. For example, the management server 100 may manage an application for the use of the battery swap service and provide a reward to the user through the application.

The management server 100 may perform overall management for operating the battery swap service, such as management of the swappable battery charging station 200, for example, battery swap in the swappable battery charging station 200, management of batteries stored in each swappable battery charging station 200, reward settlement management, and the like.

According to an embodiment, the management server 100 may be implemented as any computing device such as a workstation, a cloud, a data drive, and a data station. In addition, the management server 100 may be implemented as one or more management servers 100 physically or logically separated based on functions, detailed configurations of functions, or data and may transmit and receive data through communication between the management servers 100 and process the transmitted and received data.

According to an embodiment, the management server 100 may include a communication circuit 111, a memory 113, and a processor 115.

The communication circuit 111 may support establishment of wired and wireless communication connection between the management server 100 and the external electronic device (e.g., the swappable battery charging station 200) and communication execution through the established communication. According to one embodiment, the communication circuit 111 may include a wireless communication circuit (e.g., a cellular communication circuit, a short range wireless communication circuit, or a global navigation satellite system (GNSS) communication circuit) or a wired communication circuit (e.g., a local area network (LAN) communication circuit or a power line communication circuit) and communicate with the external electronic device through a short range communication network, such as Bluetooth, WiFi direct, or infrared data association (IrDA), or a long distance communication network, such as a cellular network, an Internet, a computer network, using the corresponding communication circuit among the above communication circuits. Various types of the communication circuits 111 may be implemented as one chip or may each be implemented as a separate chip. For example, the communication circuit 111 of the management server 100 may communicate with the swappable battery charging station 200 to acquire the state of the stored battery.

The memory 113 may store commands, control command code, control data, or user data for controlling the management server 100. For example, the memory 113 may include at least one of an application program, an operating system (OS), middleware, or a device driver. The memory 113 may include one or more of a volatile memory and a non-volatile memory. The volatile memory may include a dynamic random access memory (DRAM), a static RAM (SRAM), a synchronous DRAM (SDRAM), a phase-change RAM (PRAM), a magnetic RAM (MRAM), a resistive RAM (RRAM), a ferroelectric RAM (FeRAM), etc. The non-volatile memory may include a read only memory (ROM), a programmable ROM (PROM), an electrically programmable ROM (EPROM), an electrically erasable programmable ROM (EEPROM), a flash memory, etc. The memory 113 may further include a non-volatile medium such as a hard disk drive (HDD), a solid state disk (SSD), an embedded multi - media card (eMMC), or a universal flash storage (UFS). In an embodiment, the memory 113 may store the state of the stored battery acquired through the communication circuit 111.

The processor 115 may control the overall operation of the management server 100. In various embodiments, the processor 115 may include one processor core (single core) or include a plurality of processor cores. For example, the processor 115 may include a multicore, such as a dual-core, a quad-core, or a hexa-core. According to embodiments, the processor 115 may further include a cache memory located internally or externally. According to embodiments, the processor 115 may be configured as one or more processors. For example, the processor 115 may include at least one of an application processor, a communication processor, or a graphical processing unit (GPU).

All or some of the processors 115 may be electrically or operatively coupled with or connected to other components (e.g., the communication circuit 111 or the memory 113) in the management server 100. The processor 115 may receive commands of other components, interpret the received commands, and perform calculations or process data according to the interpreted commands. The processor 115 may interpret messages, data, commands, or signals received from the communication circuit 111 and the memory 113. The processor 115 may generate new messages, data, commands, or signals based on the received messages, data, commands, or signals. The processor 115 may provide the processed or generated messages, data, commands, or signals to the communication circuit 111 or the memory 113.

The processor 115 may process data or signals generated or generated by a program. For example, the processor 115 may request commands, data, or signals to the memory 113 to execute or control the program. The processor 115 may record (or store) or update commands, data, or signals in the memory 113 to execute or control the program.

According to an embodiment, the processor 115 may acquire the state of the battery stored in the swappable battery charging station 200.

In one embodiment, the processor 115 may acquire the state of the battery stored in the swappable battery charging station 200 from the swappable battery charging station 200 through the communication circuit 111. In another embodiment, each battery stored in the swappable battery charging station 200 (i.e., used in the battery swap service) may have a battery management system (BMS), and the management server 100 may acquire the state of each battery from the BMS of each battery. In addition, the management server 100 may acquire the state of the battery from a component such as a charger (or charger/discharger) for charging each battery in the swappable battery charging station 200, and a component of the management server 100 acquiring the state of the battery is not limited.

The processor 115 may acquire information such as a state of charge (SOC) and a state of health (SOH) of each battery stored in the swappable battery charging station 200 and acquire various pieces of information such as a current, voltage, temperature, and charging stage of each battery.

According to an embodiment, the processor 115 may set a user-specifiable battery based on the state of the stored battery. The processor 115 may set the user-specifiable battery for battery swap in the swappable battery charging station 200. For example, the processor 115 may specify batteries, which satisfy specific conditions among batteries stored in the swappable battery charging station 200, as swappable batteries.

The processor 115 may set conditions for specifying a swappable battery in consideration of an efficient operation of the swappable battery charging station 200, management of each battery, user convenience, and the like. Conditions for specifying a battery may be set in various ways, and for example, the processor 115 may set a battery having a charging rate greater than or equal to a reference value as a specifiable battery.

When the specific conditions are satisfied, the processor 115 may set the battery to a swappable battery even when the battery is not fully charged. The processor 115 may operate the battery swap service more efficiently by setting the battery to a swappable battery when the conditions are satisfied even when the battery is not fully charged.

According to an embodiment, the processor 115 may set a battery for which constant current charging is completed among the batteries stored in the swappable battery charging station 200 to a specifiable battery. The swappable battery charging station 200 may perform the constant voltage charging after the constant current charging of each battery, and the processor 115 may set a battery in which the constant current charging is completed, for example, a battery in the which constant voltage charging is in progress or a fully charged battery, to a specifiable battery.

As described above, since the constant current charging and the constant voltage charging are efficient due to a shorter charging time compared to a range of the charging rate corresponding to the constant current charging section, the processor 115 may set the conditions in which the battery is specified as a swappable battery to the completion of the constant current charging to effectively distribute the charging capability of the swappable battery charging station 200, thereby efficiently operating the battery swap service.

According to an embodiment, when the battery specified by the user is not a fully charged battery, the processor 115 may provide a reward to the user. To this end, the processor 115 may calculate a reward to be provided to the user. The reward may be provided in various ways, such as cash and points.

The processor 115 may set a battery that satisfies a specific condition (e.g., completion of constant current charging, or a specified condition) to a specifiable battery even when the battery is not fully charged so that the user may select a non-fully charged battery in some cases. When the user specifies the non-fully charged battery as a swappable battery, the processor 115 may calculate and provide a reward to compensate for this because the user may not use the battery as much as it is not fully charged.

In another aspect, since the charging time required for the constant voltage charging is longer than the constant current charging time when the battery is charged, when only the fully charged battery is set to a swappable battery, the charging time increases, making it difficult to efficiently operate the swappable battery charging station 200 having a limitation to charging capability and accommodation capability. Therefore, the swappable battery system 10 can increase the charging time and battery storage efficiency in the swappable battery charging station 200 by inducing a case in which the user sets the non-fully charged battery and swap the battery.

To this end, the processor 115 may provide a reward to a user who specifies a non-fully charged battery to induce the user to specify the non-fully charged battery for which constant current charging has been completed in order to receive the reward, and thus the swappable battery system 10 may enable faster and more efficient battery swap.

According to an embodiment, when the battery specified by the user is not a fully charged battery, the processor 115 may calculate a reward based on at least one of a state of the battery specified by the user and information about the user. For example, the processor 115 may calculate a reward in consideration of battery state information such as an SOC, an SOH, a battery swap count, and frequency of swap of the battery specified by the user, and frequency of use of the battery swap service, number of uses, and subscription period of the user.

According to an embodiment, the processor 115 may calculate a reward based on the SOC and SOH of the battery specified by the user. In this case, the SOC and SOH of the battery specified by the user may be a charging rate and lifetime at a time point when the user specifies a swappable battery.

Since the capacity of the actually usable battery varies depending on a current lifetime of the battery even in the case of the same type of battery, the processor 115 may calculate a reward in consideration of a charging rate and lifetime of the battery. For example, the processor 115 may calculate and provide a larger reward as the charging rate is lower and the lifetime is shorter.

According to an embodiment, the processor 115 may calculate a reward based on an expected capacity calculated from the charging rate and lifetime of the battery specified by the user. Here, the expected capacity may be a usable capacity of the battery according to the charging rate and lifetime.

In an embodiment, the processor 115 may calculate a reward according to a ratio between the expected capacity of the battery specified by the user and the maximum expected capacity of the corresponding type of battery. Here, the maximum expected capacity may be a usable capacity when the charging rate of the battery is 100% and the lifetime thereof is 100%.

[Table 1]

| Specified battery SOC (%) | $x$ |
|---|---|
| Specified battery SOH (%) | $y$ |
| Reference reward (KRW) | $z$ |
| Maximum expected capacity | 100*100 |
| Expected capacity of specified battery | $(x+k1)*(x+k2)$ |
| Reward for specified battery | $z * \dfrac{100*100}{(x+k1)*(x+k2)}$ |

Table 1 shows an example in which a reward is calculated according to a charging rate and lifetime. Referring to Table 1, when the charging rate of the battery specified by the user is $x$(%) and the lifetime thereof is $y$(%), the expected capacity may be calculated as $(x+k1)*(y+k2)$. Here, k1 and k2 may be preliminary constants for a charging rate and lifetime, respectively.

In this case, the processor 115 may calculate a reward to be proportional to a ratio (maximum expected capacity/expected capacity) between the expected capacity and the maximum expected capacity. For example, the processor 115 may calculate a reward as $z * \dfrac{100*100}{(x+k1)*(x+k2)}$ Here, z denotes a proportional constant as a reference reward.

For example, when the charging rate of the specified battery is 90%, the lifetime thereof is 90%, the preliminary constant k1=k2=0, and z=500 (KRW), the processor 115 may provide a reward of KRW 617 to the user. The above-described reward calculation of the processor 115 is only exemplary and is not limited thereto.

According to an embodiment, the processor 115 may calculate a reward based on the number of times rewards provided to the user and the subscription period of the service for using the swappable battery charging station 200.

For example, the processor 115 may calculate a reward to be provided to the user differently according to the number of times rewards provided to the user on a monthly basis. For example, the processor 115 may calculate a reward to decrease as the number of times rewards provided to the user on a monthly basis increases. In some cases, the processor 115 may provide the same minimum reward the specific number of times or more and limit the maximum number of times rewards provided.

The processor 115 may calculate a greater reward as the service subscription period of the user is longer. For example, the processor 115 may provide a reward in proportion to the service subscription period. For example, the processor 115 may calculate a reward in various ways, such as multiplying a specific value or adding a specific value according to a subscription period.

In one embodiment, the processor 115 may calculate a reward by dividing the subscription period of the user on a monthly basis. For example, the processor 115 may calculate a reward so that the longer the subscription period, the greater the reward. For example, the processor 115 may set a minimum subscription period in which an additional reward is paid, and when the subscription period of the user is the minimum subscription period or longer, the processor 115 may calculate a greater reward to be provided to the user than the reference reward.

[Table 2]

| The number of times maximum reward provided on a monthly basis | n |
| --- | --- |
| current swap count | x |
| Months of subscription (months) | t |
| Reference reward (KRW) | A |
| Reward to be provided | $(n-x)*A+b*t*A$ |

Table 2 shows an example in which a reward is calculated according to the number of times rewards provided and the subscription period. Referring to Table 2, when the maximum number of times rewards provided on a monthly basis is n, the current swap count of the user is x, the service subscription period (months of subscription) of the user is t, and the reference reward is A, the processor 115 may calculate a reward to be provided to the user as $(n-x)*A+b*t*A$. Here, b denotes a preliminary constant. In some cases, the processor 115 may set a minimum subscription period in which a reward is added according to the subscription period. For example, the processor 115 may additionally calculate a reward only when the subscription period is 3 months or more.

For example, when n=10, x=5, t=6, A=50, and b=0.1, the processor 115 may calculate a reward as 280 (KRW).

In this way, the processor 115 may induce the user to continuously use the battery swap service by calculating the reward according to the user's subscription period.

According to an embodiment, the processor 115 may calculate a reward based on a state of a used battery. In an embodiment, the processor 115 may calculate a reward based on an SOC of the used battery. Here, the SOC of the used battery may be based on the time of return of the user.

According to an embodiment, when the charging rate of the used battery is within a preset range, the processor 115 may calculate a reward based on a boundary value between the charging rate of the used battery and the preset range. To this end, the range of the charging rate of the used battery, which is a reference for which the processor 115 provides a reward, may be preset.

As charging and discharging of the battery are repeated, the lifetime of the battery may decrease, and the service lifetime (maximum usage) of the battery may vary depending on a battery usage pattern, a charging/discharging pattern, and the like. For example, when the battery is used, the service lifetime may vary depending on a depth of discharge (DOD).

[Table 3]

| DOD (%) | Discharge cycle (LiPO4 battery) |
| --- | --- |
| 100 | 600 |
| 80 | 900 |
| 60 | 1500 |
| 40 | 3000 |
| 20 | 9000 |
| 10 | 15000 |

Table 3 shows the maximum usable discharge cycle according to the DOD when the LiPO4 battery is used. Referring to Table 3, it can be confirmed that up to 600 cycles may be used when the battery is used at 100% DOD, up to 900 cycles may be used when the battery is used at 80% DOD, and up to 1500 cycles may be used when the battery is used at 60% DOD.

Converting this into a total usage, it can be confirmed that the maximum usage varies depending on the DOD, with 60000% (600*100) for 100% DOD, 72000% (900*80) for 80% DOD, and 90000% (1500*60) for 60% DOD, and the maximum usage decreases as the battery is used closer to full discharge (100% DOD).

It is the nature of general batteries as well as the nature of LiPO4 batteries, and the swappable battery system 10 may provide a reward to the user according to the charging rate of the used battery to induce the user not to use the battery close to full discharge, thereby efficiently managing the battery.

Therefore, the processor 115 may determine a lower limit value of the preset range in consideration of the above-described maximum usage of the battery for effective use of the battery.

When the user frequently swaps the battery without using much of the battery, the charging efficiency in the swappable battery charging station 200 may be lowered. For example, when swap and return are repeated in a section in which a charging rate is high, such as a case in which a user swaps the battery as a 90%-charged battery and returns a 80%-charged battery after using 10%, the charging of the battery at the swappable battery charging station 200 may be inefficient due to the high proportion of the constant voltage charging section. Therefore, the processor 115 may determine an upper limit value of the preset range to prevent too frequent swap of the battery.

In this way the processor 115 may determine the preset range in consideration of the effective use of the battery and the charging efficiency in the swappable battery charging station 200.

In an embodiment, the processor 115 may calculate a reward based on the boundary value between the charging rate of the used battery and the preset range. For example, when it is determined that the preset range is a(%) or more and b(%) or less, the processor 115 may calculate a reward in consideration of the charging rate of the used battery and the values of a and/or b. For example, the processor 115 may calculate a reward in proportion to a difference between the upper limit value b of the preset range and the charging rate of the used battery.

[Table 4]

| | |
|---|---|
| Maximum value (%) of preset range | x |
| Minimum value (%) of preset range | y |
| Charging rate (%) of used battery | z |
| Reference reward (KRW) | A |
| Reward (KRW) to be provided | (x-z)*A |

Table 4 shows an example in which a reward is calculated according to the charging rate of the used battery. Referring to Table 4, when the maximum and minimum values of the preset range are x and y, respectively, the charging rate of the used battery is z, and the reference reward is A, the processor 115 may calculate the user's reward as (x-z)*A. The above-described reward calculation methods may be applied individually or compositely. For example, the processor 115 may comprehensively adopt the reward calculation method according to the charging rate and lifetime of the specified battery and the reward calculation method according to the charging rate of the used battery. For example, the processor 115 may calculate a reward by sequentially adopting calculation according to each reward calculation method.

According to an embodiment, the processor 115 may transmit reward information to the user's terminal. The processor 115 may provide the user with the reward information so that the user may manage the reward through the battery swap service.

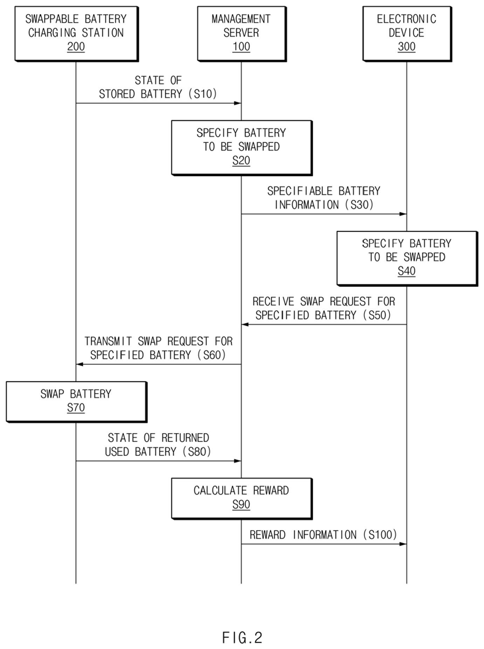

FIG. 2 is a view for describing an operation of the swappable battery system according to one embodiment disclosed herein. The embodiment shown in FIG. 2 is only one embodiment, the order of operations according to various embodiments of the present disclosure may differ from that shown in FIG. 2, and some operations shown in FIG. 2 may be omitted, the order between the operations may be changed, or the operations may be merged.

First, the management server 100 may acquire the state of the battery stored in the swappable battery charging station 200 (S10). Although FIG. 2 shows that the management server 100 acquires the state of the battery stored from the swappable battery charging station 200, it is only one embodiment, and the management server 100 may acquire the state of the battery from other components such as an BMS and a charger/discharger that manage each battery.

The management server 100 may set a user-specifiable battery based on the state of the stored battery (S20). For example, the management server 100 may set a battery that satisfies a specific condition among the stored batteries as a specifiable battery. In an embodiment, the management server 100 may set a battery for which constant current charging has been completed among the stored batteries as a specifiable battery.

The management server 100 may transmit specifiable battery information to the electronic device 300 (S30). Here, the electronic device 300 may be a user terminal of a user, and when the specifiable battery information is transmitted to the electronic device 300, it may mean that the specifiable battery information is transmitted to an application for using a battery swap service installed in the user terminal.

The user may specify a battery to be swapped (S40). For example, the user may execute the application in the user terminal 300 and specify the battery to be swapped. Here, when the user specifies the battery to be swapped, it may mean that a swap reservation is made for the specified battery, and the actual swap for the specified battery may be performed through a manipulation at the swappable battery charging station 200.

The management server 100 may receive a swap request for the specified battery (S50). For example, the management server 100 may receive the swap request from the application and check the battery specified by the user.

The management server 100 may transmit the swap request for the specified battery to the swappable battery charging station 200 (S60).

The swappable battery charging station 200 may perform a battery swap operation according to the user's manipulation (S70). For example, the swappable battery charging station 200 may provide the user with the battery specified by the user according to the user's manipulation and store the used battery returned by the user.

The management server 100 may acquire a state of the returned used battery (S80). For example, the management server 100 may acquire a state of the returned used battery from the swappable battery charging station 200, the BMS, the charger/discharger, and the like.

The management server 100 may calculate a reward to be provided to the user (S90). In an embodiment, the management server 100 may calculate a reward based on at least one of whether the battery is fully charged by the user and the state of the used battery. In some cases, the reward calculating operation S90 of the management server 100 may be performed after operation S50.

The management server 100 may transmit the calculated reward information to the electronic device 300 (S100). For example, the reward information may include the calculated reward value and the number of times rewards provided, and the user may check the reward information through an application.

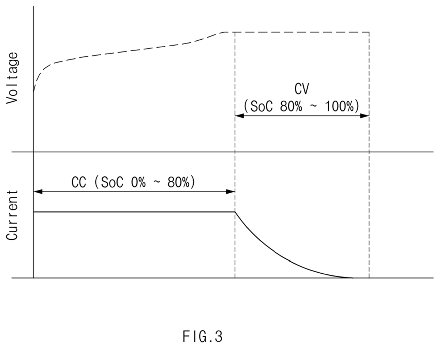

FIG. 3 is a view showing a charging process of a battery according to one embodiment disclosed herein.

Referring to FIG. 3, a charging process of the battery may include a constant current charging section and a constant voltage charging section. In FIG. 3, a "CC" section is a constant current charging section, and a "CV" section is a constant voltage charging section.

As shown in FIG. 3, when a fully discharged battery is charged, the battery may be charged at a constant current in a section in which the charging rate ranges from 0% to 80%, and the battery may be charged at a constant voltage in a section in which the charging rate ranges from 80% to 100%. In this case, it can be confirmed that the constant current charging section is four times the charging rate compared to the constant voltage charging section but a difference between the charging times decreases. That is, during the charging process of the battery, it is efficient to use the constant current charging section in terms of the charging rate compared to the charging time.

Therefore, the swappable battery system 10 can increase the operational efficiency of the battery swap service by specifying the batteries for which the constant current charging has been completed as swappable batteries to efficiently charge the batteries.

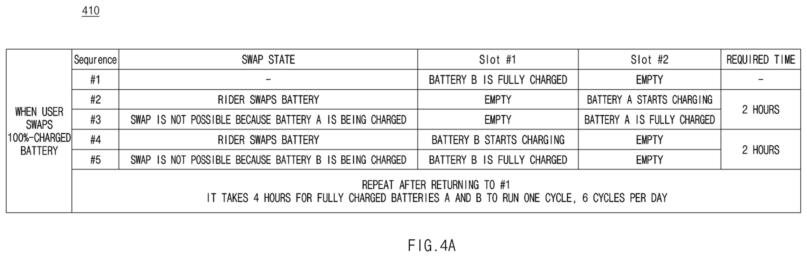

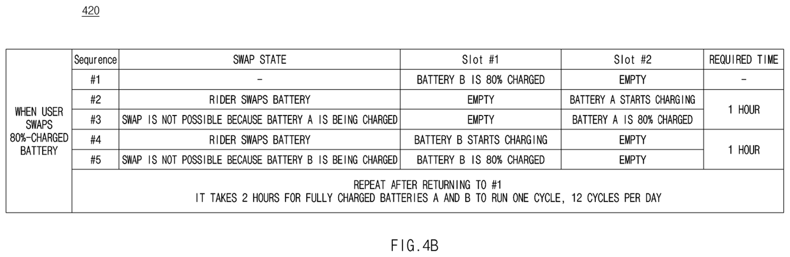

FIGS. 4A and 4B are views showing battery swap simulation results of the swappable battery system according to one embodiment disclosed herein.

FIGS. 4A and 4B show an example in which the swappable battery charging station 200 is operated when two battery storage spaces (slots) of the swappable battery charging station 200 are present.

First, 410 of FIG. 4A is an example (conventional operation method) in which only a fully charged battery may be swapped. Referring to 410 of FIG. 4A, when only the fully charged battery may be swapped, a rider may receive battery B from a slot (Slot #1) in which the fully charged battery (battery B) is stored and store a used battery A in an empty slot (Slot #2). Thereafter, battery A may be fully charged in a slot (Slot #2) in which battery A is stored, and in this case, it may take 2 hours. While battery A is charged, even when another rider wants to swap the battery, battery A is fully charged and thus cannot be swapped.

That is, since the battery can be swapped only after 2 hours have elapsed and battery A is fully charged, it takes at least 4 hours for the battery to be swapped once in the two slots of the swappable battery charging station 200. In this case, the number of times the rider swaps the battery is limited to up to 6 cycles per day.

420 of FIG. 4B is an example of a case in which a battery for which constant current charging has been completed may be swapped, and it is assumed that the constant current charging takes 1 hour until 80% is charged. In this case, after the rider swaps the battery, it takes 1 hour for the used battery (battery A) to reach swappable conditions, and thus another rider may swap the battery after 1 hour. Therefore, it takes at least two hours for the battery to be swapped once in the two slots of the swappable battery charging station 200, and the rider may swap the battery up to 12 cycles per day.

In addition, it can be confirmed that, in terms of the maximum usage of the battery, up to 1200% (100*12) may be used per day in a case in which only a 100%-charged battery may be swapped (a case of 410), while up to 1920% (80*24) may be used per day in a case in which the battery for which the constant current charging has been charged (a case of 420) may be used, thereby efficiently using the battery.

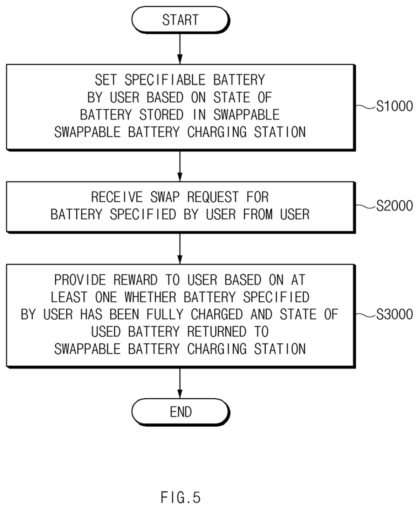

FIG. 5 is a flowchart for describing a method of operating the server according to one embodiment disclosed herein.

Referring to FIG. 5, a method of operating a server may include setting a user-specifiable battery based on a state of a battery stored in a swappable battery charging station (S1000), receiving a swap request for a battery specified by the user from the user (S2000), and providing a reward to the user based on at least one of whether the battery specified by the user has been fully charged and a state of the used battery returned by the user to the swappable battery charging station (S3000).

In the operation S1000, the processor 115 may acquire the state of the battery stored in the swappable battery charging station and set a user-specifiable battery based on the acquired state of the stored battery. In an embodiment, the processor 115 may set a battery for which constant current charging has been completed among the stored batteries as a specifiable battery.

In the operation S2000, the processor 115 may receive a swap request for a battery specified by the user from the user. For example, the user may specify a battery among swappable batteries from a user terminal, and the processor 115 may receive the swap request for the specified battery.

In the operation S3000, the processor 115 may calculate a reward to be provided to the user based on at least one of whether the battery specified by the user has been fully charged and a state of a used battery.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of this document.

**Claims**

1. A server comprising:

   a communication circuit;
   a memory; and
   a processor operatively connected to the communication circuit and the memory,
   wherein the processor is configured to:

   set a battery specifiable by a user based on a state of a battery stored in a swappable battery charging station;
   receive a swap request for the battery specified by the user from the user; and
   calculate a reward to be provided to the user based on at least one of whether the battery specified by the user has been fully charged and a state of a used battery returned to the swappable battery charging station by the user.

2. The server of claim 1, wherein the processor sets a battery for which constant current charging has been completed among the stored batteries to a specifiable battery.

3. The server of claim 1, wherein the processor calculates the reward based on at least one of a state of the battery specified by the user and information about the user when the battery specified by the user is not a fully charged battery.

4. The server of claim 3, wherein the processor calculates the reward based on a state of charge (SOC) and a state of health (SOH) of the battery specified by the user.

5. The server of claim 4, wherein the processor calculates the reward based on an expected capacity calculated from the SOC and SOH of the battery specified by the user.

6. The server of claim 3, wherein the processor calculates the reward based on the number of times rewards provided to the user and a service subscription period in which the swappable battery charging station is used.

7. The server of claim 1, wherein the processor calculates the reward based on an SOC of the used battery.

8. The server of claim 7, wherein the processor calculates the reward based on a boundary value between the SOC of the used battery and a preset range when the SOC of the used battery is within the preset range.

9. The server of claim 1, wherein the processor transmits the reward information to a terminal of the user.

10. A method of operating a server, comprising:

    setting a battery specifiable by a user based on a state of a battery stored in a swappable battery charging station;
    receiving a swap request for the battery specified by the user from the user; and
    calculating a reward to be provided to the user based on at least one of whether the battery specified by the user has been fully charged and a state of a used battery returned to the swappable battery charging station by the user.

11. The method of claim 10, wherein the setting of the specifiable battery includes setting a battery for which constant current charging has been completed among batteries stored in the swappable battery charging station to the specifiable battery.

12. The method of claim 10, wherein the providing of the reward to the user includes calculating the reward based on at least one of a state of the battery specified by the user and information about the user when the battery specified by the user is not a fully charged battery.

13. The method of claim 10, wherein the providing of the reward to the user includes calculating the reward based on a state of charge (SOC) of the used battery.

14. A swappable battery system comprising:

    a swappable battery charging station configured to:
    charge a battery stored therein;
    provide a battery specified by a user among specifiable batteries according to a user's swap request; and
    set a used battery of the user to be returned; and
    a manager server configured to:

        set a battery specifiable by a user based on a state of a battery stored in the swappable battery charging station; and
        calculate a reward to be provided to the user based on at least one of whether the battery specified by the user has been fully charged and a state of the used battery.

15. The swappable battery system of claim 14, wherein the swappable battery charging station charges the stored battery at a constant current and a constant voltage.

16. The swappable battery system of claim 15, wherein the management server sets a battery for which the constant current charging has been completed among the stored batteries to the specifiable battery.

10

```
┌─────────────────────────────────────┐
│         MANAGEMENT SERVER            │
│                100                   │
│  ┌───────────────────────────────┐  │
│  │    COMMUNICATION CIRCUIT      │  │
│  │             111               │  │
│  └───────────────────────────────┘  │
│                                      │
│  ┌───────────────────────────────┐  │
│  │           MEMORY              │  │
│  │             113               │  │
│  └───────────────────────────────┘  │
│                                      │
│  ┌───────────────────────────────┐  │
│  │          PROCESSOR            │  │
│  │             115               │  │
│  └───────────────────────────────┘  │
└─────────────────────────────────────┘
```

SWAPPABLE BATTERY
CHARGING STATION
200

FIG.1

FIG.2

FIG.3

EP 4 769 289 A1

410

| | Sequence | SWAP STATE | Slot #1 | Slot #2 | REQUIRED TIME |
|---|---|---|---|---|---|
| WHEN USER SWAPS 100%-CHARGED BATTERY | #1 | – | BATTERY B IS FULLY CHARGED | EMPTY | – |
| | #2 | RIDER SWAPS BATTERY | EMPTY | BATTERY A STARTS CHARGING | 2 HOURS |
| | #3 | SWAP IS NOT POSSIBLE BECAUSE BATTERY A IS BEING CHARGED | EMPTY | BATTERY A IS FULLY CHARGED | |
| | #4 | RIDER SWAPS BATTERY | BATTERY B STARTS CHARGING | EMPTY | 2 HOURS |
| | #5 | SWAP IS NOT POSSIBLE BECAUSE BATTERY B IS BEING CHARGED | BATTERY B IS FULLY CHARGED | EMPTY | |
| | | REPEAT AFTER RETURNING TO #1<br>IT TAKES 4 HOURS FOR FULLY CHARGED BATTERIES A AND B TO RUN ONE CYCLE, 6 CYCLES PER DAY | | | |

FIG.4A

420

| | Sequence | SWAP STATE | Slot #1 | Slot #2 | REQUIRED TIME |
|---|---|---|---|---|---|
| WHEN USER SWAPS 80%-CHARGED BATTERY | #1 | – | BATTERY B IS 80% CHARGED | EMPTY | – |
| | #2 | RIDER SWAPS BATTERY | EMPTY | BATTERY A STARTS CHARGING | 1 HOUR |
| | #3 | SWAP IS NOT POSSIBLE BECAUSE BATTERY A IS BEING CHARGED | EMPTY | BATTERY A IS 80% CHARGED | |
| | #4 | RIDER SWAPS BATTERY | BATTERY B STARTS CHARGING | EMPTY | 1 HOUR |
| | #5 | SWAP IS NOT POSSIBLE BECAUSE BATTERY B IS BEING CHARGED | BATTERY B IS 80% CHARGED | EMPTY | |
| | REPEAT AFTER RETURNING TO #1<br>IT TAKES 2 HOURS FOR FULLY CHARGED BATTERIES A AND B TO RUN ONE CYCLE, 12 CYCLES PER DAY | | | | |

FIG.4B

```
                    ┌─────────┐
                    │  START  │
                    └─────────┘
                         │
                         ▼
        ┌───────────────────────────────────┐
        │       SET SPECIFIABLE BATTERY      │
        │       BY USER BASED ON STATE OF    │      S1000
        │       BATTERY STORED IN SWAPPABLE  │
        │   SWAPPABLE BATTERY CHARGING STATION│
        └───────────────────────────────────┘
                         │
                         ▼
        ┌───────────────────────────────────┐
        │       RECEIVE SWAP REQUEST FOR     │      S2000
        │   BATTERY SPECIFIED BY USER FROM USER│
        └───────────────────────────────────┘
                         │
                         ▼
        ┌───────────────────────────────────┐
        │   PROVIDE REWARD TO USER BASED ON AT│
        │   LEAST ONE WHETHER BATTERY SPECIFIED│
        │ BY USER HAS BEEN FULLY CHARGED AND STATE OF│  S3000
        │          USED BATTERY RETURNED TO  │
        │   SWAPPABLE BATTERY CHARGING STATION│
        └───────────────────────────────────┘
                         │
                         ▼
                    ┌─────────┐
                    │   END   │
                    └─────────┘
```

FIG.5

## INTERNATIONAL SEARCH REPORT

| International application No. |
|---|
| **PCT/KR2024/015498** |

### A. CLASSIFICATION OF SUBJECT MATTER

**G06Q 50/40**(2024.01)i; **B60L 53/80**(2019.01)i; **B60L 53/62**(2019.01)i; **B60L 53/65**(2019.01)i; **G06Q 30/02**(2012.01)i

According to International Patent Classification (IPC) or to both national classification and IPC

### B. FIELDS SEARCHED

Minimum documentation searched (classification system followed by classification symbols)

G06Q 50/40(2024.01); B60L 53/53(2019.01); B60L 53/65(2019.01); B60L 53/66(2019.01); B62J 43/13(2020.01); G06Q 10/04(2012.01); G06Q 10/08(2012.01); H01M 10/42(2006.01); H02J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 교환(exchange), 스테이션(station), 지정 가능(specifiable), 설정 (setting), 상태(status), 미완충(incomplete charge), 리워드(reward)

### C. DOCUMENTS CONSIDERED TO BE RELEVANT

| Category* | Citation of document, with indication, where appropriate, of the relevant passages | Relevant to claim No. |
|---|---|---|
| X<br><br>Y | KR 10-2023-0066914 A (HYUNDAI KEFICO CORPORATION) 16 May 2023 (2023-05-16)<br>See paragraphs [0107]-[0109] and [0133]-[0137] and claims 1, 3 and 7-8. | 1,3-6,9-10,12,14<br><br>2,7-8,11,13,15-16 |
| Y | JP 6350738 B2 (OMRON CORPORATION) 04 July 2018 (2018-07-04)<br>See paragraphs [0030]-[0035] and [0048]-[0049] and claim 1. | 2,11,15-16 |
| Y | KR 10-2205996 B1 (TWOHIM CO., LTD. et al.) 21 January 2021 (2021-01-21)<br>See claim 1. | 7-8,13 |
| A | KR 10-2023-0050505 A (BIZMODELINE CO., LTD.) 17 April 2023 (2023-04-17)<br>See claims 1 and 8. | 1-16 |
| A | KR 10-2022-0112434 A (JUNG, Chang Hyun) 11 August 2022 (2022-08-11)<br>See paragraphs [0061]-[0066]. | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2025** | **13 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015498**

| Patent document cited in search report | | | Publication date (day/month/year) | Patent family member(s) | | | Publication date (day/month/year) |
|---|---|---|---|---|---|---|---|
| KR | 10-2023-0066914 | A | 16 May 2023 | KR | 10-2682156 | B1 | 04 July 2024 |
| JP | 6350738 | B2 | 04 July 2018 | EP | 3249774 | A1 | 29 November 2017 |
| | | | | EP | 3249774 | B1 | 29 May 2019 |
| | | | | MY | 182690 | A | 29 January 2021 |
| | | | | PH | 12017501569 | A1 | 05 February 2018 |
| | | | | TW | 201633242 | A | 16 September 2016 |
| | | | | TW | I567683 | B | 21 January 2017 |
| | | | | US | 10406926 | B2 | 10 September 2019 |
| | | | | US | 2018-0043785 | A1 | 15 February 2018 |
| | | | | WO | 2016-143374 | A1 | 15 September 2016 |
| | | | | WO | 2016-143374 | A1 | 01 February 2018 |
| KR | 10-2205996 | B1 | 21 January 2021 | None | | | |
| KR | 10-2023-0050505 | A | 17 April 2023 | None | | | |
| KR | 10-2022-0112434 | A | 11 August 2022 | None | | | |

Form PCT/ISA/210 (patent family annex) (July 2022)

**REFERENCES CITED IN THE DESCRIPTION**

**Patent documents cited in the description**

- KR 1020230172499